(19) Europäisches Patentamt
European Patent Office
Office européen des brevets

(11) Veröffentlichungsnummer: **0 006 438**
**B1**

(12) # EUROPÄISCHE PATENTSCHRIFT

(45) Veröffentlichungstag der Patentschrift: **05.10.83**

(21) Anmeldenummer: **79101552.2**

(22) Anmeldetag: **22.05.79**

(51) Int. Cl.³: **C 08 F 218/04,**
C 08 F 214/00
//(C08F218/04, 218/12),
(C08F214/00, 218/12)

(54) **Hydroxylgruppen enthaltende Vinylester- und Vinylhalogenid-Copolymere, deren Herstellung und Verwendung.**

(30) Priorität: **23.05.78 DE 2822436**

(43) Veröffentlichungstag der Anmeldung:
**09.01.80 Patentblatt 80/1**

(45) Bekanntmachung des Hinweises auf die Patenterteilung:
**05.10.83 Patentblatt 83/40**

(84) Benannte Vertragsstaaten:
**BE CH DE FR GB IT NL SE**

(56) Entgegenhaltungen:
**FR - A - 1 156 649**
**US - A - 2 475 557**
**US - A - 3 293 325**

***Die Akte enthält technische Angaben, die nach dem Eingang der Anmeldung eingereicht wurden und die nicht in dieser Patentschrift enthalten sind.***

(73) Patentinhaber: **Consortium für elektrochemische Industrie GmbH**
**Zielstattstrasse 20**
**D-8000 München 70 (DE)**

(72) Erfinder: **Marquardt, Klaus, Dr. Dipl.-Chem.**
**Mehringer Strasse 49 b**
**D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 006 438 B1**

Courier Press, Leamington Spa, England.

Hydroxylgruppen enthaltende Vinylester- und Vinylhalogenid-Copolymere, deren Herstellung und Verwendung

Hydroxylgruppentragende Monomereinheiten enthaltende Copolymerisate von Vinylestern und/oder Vinylchlorid, die ggf. noch andere copolymerisierbare Monomereinheiten enthalten, sind bekannt. Als hydroxylgruppentragende Monomereinheiten stehen solche zur Verfügung, die durch Verseifen von Vinylchlorid-Vinylacetatcopolymeren entstanden sind oder durch Einpolymerisieren hydroxylgruppenhaltiger Monomerer erhalten werden können. Als hydroxylgruppentragende Monomereinheiten finden beispielsweise Hydroxyalkylvinyläther, Dihydroxyalkylmaleinate und Hydroxyalkylacrylate bzw. -methacrylate Verwendung. Der Nachteil dieser hydroxylgruppentragenden Monomereinheiten besteht darin, daß bei der Polymerisation eine ungünstige Verteilung dieser Einheiten im Polymerisat resultiert, so daß die Vernetzung mit Diisocyanaten entweder nur unvollständig verläuft oder zur Vernetzung unwirtschaftlich hohe Hydroxylgruppenkonzentrationen erforderlich sind.

Hydroxycarbonsäureallylester, wie z.B. Glycolsäureallylester, Milchsäureallylester sind ebenfalls bekannt, doch wirken diese Hydroxycarbonsäureallylestermonomeren bei der Polymerisation als Regler und setzen darüberhinaus die Polymerisationsgeschwindigkeit stark herab.

Aufgabe der Erfindung war es, hydroxylgruppenhaltige Vinylester und/oder Vinylhalogenidcopolymerisate zu finden, die durch Polymerisation ohne nachfolgende Verseifung herstellbar sind, deren Polymerisationsgeschwindigkeit auch bei Zusatz größerer Mengen (bis zu 20 Gew.%) hydroxylgruppenhaltiger Monomerer im wesentlichen nich herabgesetzt wird und die einen K-Wert (nach Fikentscher, Zellulose Chemie 13 (1932) 58) von mindestens 45 ergeben, wobei die hydroxylgruppenhaltigen Monomeren im Polymeren gleichmäßig verteilt sind und somit eine gute Vernetzung der Polymerisate durch Diisocyanate ermöglicht wird.

Gegenstand der Erfindung sind vernetzbare Copolymerisate, die durch Polymerisation aus Vinylester und/oder Vinylhalogeniden und hydroxylgruppenhaltigen Monomereinheiten und ggf. einem oder mehrerern copolymerisierbaren Monomeren und der Gruppe Äthylen, Propylen, Acryl-, Methacrylsäure, deren Ester mid Alkylresten bis zu 8 Kohlenstoffatomen oder deren Amide oder Acrylnitril oder Methacrylnitril hergestellt werden, dadurch gekennzeichnet, daß das Copolymere

a) 50 bis 99 Gew.% Vinylester und/oder Vinylhalogenide,
b) bis zu 40 Gew.% copolymerisierbare Monomer aus der Gruppe Äthylen, Propylen, Acryl-, Methacrylsäure, deren Ester mit Alkylresten bis zu 8 Kohlenstoffatomen oder deren Amide oder Acrylonitril, Methacrylnitril und
c) 1 bis 50 Gew.% hydroxylgruppenhaltige Allylester der allgemeinen Formel

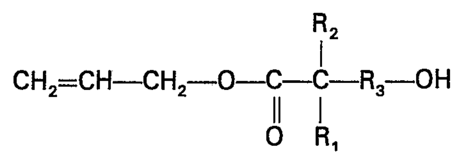

enthält, worin die Hydroxygruppe primär ist, $R_1$ und $R_2$ Wasserstoffatome oder gleiche oder verschiedene aliphatische Kohlenwasserstoffreste, vorzugsweise Wasserstoffatome oder Methylgruppen sind und $R_3$ ein Kohlenwasserstoffrest ist, wobei die Zahl der Kohlenstoffatome der Gruppen $R_1$, $R_2$ und $R_3$ zwischen 1 und 16 beträgt, die Gesamtzahl der Kohlenstoffatome in $R_1$, $R_2$ und $R_3$ mindestens 2 beträgt und die Copolymeren einen K-Wert zwischen 10 und 100 aufweisen.

Eine besondere Ausführungsform der Copolymeren besteht darin, daß als Vinylester Vinylacetat und als Vinylhalogenid Vinylchlorid einpolymerisiert ist. In manchen Fällen erscheint es vorteilhaft, aus der Gruppe b) die Monomeren Äthylen und Butylacrylat auszuwählen. Häufig werden die vernetzbaren Copolymeren mit 2,5 bis 5 Mol% hydroxylgruppenhaltiger Allylester hergestellt.

Ein weiterer Gegenstand der Erfindung liegt in der Herstellung der Copolymeren. Die Polymerisation kann in Masse, wäßriger Dispersion oder als Lösungspolymerisation unter Zusatz üblicher Polymerisationshilfsstoffe und radikalbildender Katalysatoren, ggf. unter Äthylen- bzw. Propylendruck zwischen 2 und 80 bar im Autoklaven unter Rühren bei Temperaturen zwischen 20 und 90°C hergestellt werden, wobei es besonders vorteilhaft ist, wenn die hydroxylgruppenhaltigen Allylesterkomponenten gemeinsam mit den restlichen Monomeren vorgelegt werden.

Ein weiterer Gegenstand der Erfindung ist die Verwendung der Polymeren in vernetzbaren Überzugsmassen, Klebemitteln, als Bindemittel für Textilprodukte, zur Herstellung von Dichtungsmassen und Formteilen.

Die erfindungsgemäßen Polymeren sind nicht nur unproblematisch herzustellen und leicht sowie vollständig mit Diisocyanaten zu vernetzen, sondern sie zeigen darüberhinaus die Eigenschaft, daß die Glasübergangstemperatur der Copolymeren gegenüber Vinylestern und/oder Vinylhalogenidcopolymerisaten herabgesetzt ist.

Die erfindungsgemäßen Copolymeren bestehen zu 50 bis 99 Gew.%, vorzugsweise 80 bis 97 Gew.%, aus Vinylester und/oder Vinylhalogenideinheiten, wobei auch Gemische aus verschiedenen Vinylestern oder Vinylhalogeniden in Frage kommen. Als Vinylester werden solche der Alkylcarbonsäuren mit 1 bis 18 Kohlenstoffatomen, vorzugsweise 2 bis 12 Kohlenstoffatomen, genannt, insbesondere Vinylacetat, als Vinylhalogenide wird Vinylfluorid, Vinylbromid, vorzugsweise Vinylchlorid, eingesetzt.

Natürlich kann zusätzlich zu den Vinylestern und/oder Vinylhalogeniden eines oder mehrere äthylenisch ungesättigte Monomere copolymerisiert werden. Solche Monomere sind z.B. Olefine, wie Äthylen, Propylen, z.B. Styrol und substituierte Styrole, N-Vinylpyrrolidon, Croton-, Acryl- oder Methylacrylsäure und ihre Derivate, wie Ester, Amide, Acryl- und Methacrylnitril, disubstituierte Äthylene, wie Vinylidenchlorid, Vinylidencarbonat, Vinyläther, Vinylketone, olefinisch ungesättigte Dicarbonsäure, wie z.B. Malein-, Fumar- und Itakonsäure und deren Derivate, wie z.B. Halbester, Ester, auch solche mit gesättigten aliphatischen Alkoholen mit 1 bis 18 Kohlenstoffatomen, Halbamide, Amide und Salze. Geeignet sind alle polymerisierbaren Monomeren. Die vorstehenden Gruppen und Verbindungen werden nur als Beispiele für Monomere genannt, die auch für die Zwecke der Erfindung geeignet sind.

Insbesondere werden als copolymerisierbare Monomere Äthylen, Acryl- und Methacrylsäure sowie deren Ester mit Alkylresten bis zu 8 Kohlenstoffatomen oder deren Amide, Acrylnitril, Methacrylnitril in Betracht gezogen. Diese copolymerisierbaren Monomeren sind in Mengen bis zu 40 Gew.%, vorzugsweise 0 bis 20 Gew.% enthalten.

Unter den hydroxylgruppenhaltigen Allylestern werden solche der all gemeinen Formel

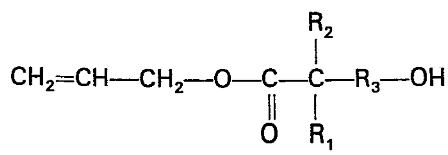

verstanden, worin $R_1$ und $R_2$ Wasserstoffatome oder gleiche oder verschiedene aliphatische Kohlenwasserstoffe oder Methylgruppen und $R_3$ ein Kohlenwasserstoffrest ist, wobei die Zahl der Kohlenstoffatome der Gruppen $R_1$, $R_2$ und $R_3$ zwischen 1 und 16 beträgt und die Gesamtzahl der Kohlenstoffatome in $R_1$, $R_2$ und $R_3$ mindestens 2 beträgt. $R_3$ ist vorzugsweise nicht verzweigt und trägt eine primäre OH-Gruppe.

Diese Monomereinheiten sind in Mengen von 1 bis 50 Gew.% einpolymerisiert. Vorzugsweise sind 2 bis 20 Gew.%, insbesondere 2,5 bis 5 Gew.%, enthalten. Beispiele für die erfindungsgemäß eingesetzten hydroxylgruppenhaltigen Allylester sind der Allylester der 5-Hydroxyvaleriansäure, 6-Hydroxycapronsäure, 11-Hydroxyundecansäure.

Die hydroxylgruppenhaltigen Allylester zeigen bei der Copolymerisation zu den erfindungsgemäßen Copolymeren überraschende Copolymerisationseigenschaften. Im Gegensatz zu herkömmlichen Allylestern beeinflussen sie weder die Polymerisationsgeschwindigkeit wesentlich, noch wird der K-Wert der resultierenden Polymeren wesentlich erniedrigt. Der K-Wert der Copolymeren liegt selbst bei Anwesenheit von beispielsweise 20 Gew.% der neuen Allylester im Copolymeren über 45, er kann jedoch, wenn es der Einsatzzweck erfordert, durch Zusatz von bekannten Molekulargewichtsreglern bei der Polymerisation in bekannter Weise abgesenkt werden.

Die erfindungsgemäßen Copolymeren können nach allen bekannten, unter Verwendung radikalebildender Katalysatoren verlaufenden Polymerisationsverfahren hergestellt werden, als da sind Substanz/Masse-Polymerisation, Emulsionspolymerisation oder durch Polymerisation, in Dispersion sowohl in wäßriger als auch in nicht wäßriger Phase, sowie durch Lösungspolymerisation oder ggf. Fällungspolymerisation. Aufgrund des besonderen Verhaltens der neuen OH-gruppenhaltigen Allylester ist es möglich, die OH-gruppenhaltigen Allylester bereits zu Beginn der Polymerisation dem Ansatz zuzufügen, da keine ungleichmäßige Verteilung der Hydroxylgruppen befürchtet werden muß.

Sollen die erfindungsgemäßen Copolymeren vernetzt werden, so kann dies nach allen schon bisher zur Vernetzung hydroxylgruppenhaltiger Polymerer bekannten Verfahren durchgeführt werden, z.B. durch Umsetzung mit aliphatischen oder aromatischen Di- oder Polyisocyanaten oder auch blockierten Isocyanaten, wie z.B. Hexamethylendiisocyanat, Toluylendiisocyanat, trimerisiertem, Hexamethylendiisocyanat oder Caprolactam blockiertem Isophorondiisocyanat.

Weitere Beispiele für Verfahren zur Vernetzung sind die Umsetzung mit Melamin-Formaldehyd-Kondensaten, wie Hexamethoxymethylmelamin, mit Dimethylolharnstoff, mit Epoxidharz-Vorkondensaten und mit Polycarbonsäuren oder -anhydriden. In allen Fällen können ggf. auch Kondensationskatalysatoren zugesetzt und erhöhte Temperaturen und/oder Druch angewendet werden.

Die erfindungsgemäßen, Hydroxylgruppen enthaltenden Copolymeren finden Verwendung als härtbare Überzugsmassen oder Klebstoffe, als Bindemittel für Textilprodukte, zur Herstellung von Dichtungsmassen oder zur Herstellung von Formteilen.

Folgende Beispiele sollen die Erfindung näher erläutern:

A) Herstellung der bisher nicht bekannten Hydroxycarbonsäureallylester

A1) 6-Hydroxycapronsäureallylester

684,6 g ε-Caprolacton und 2440 g Allylalkohol werden unter Zusatz von 1 g konzentrierter Schwefelsäure 60 Minuten unter Rückfluß gekocht. Dann wird mit 1,5 g $CaCO_3$ neutralisiert und der Allylalkohol im Rotationsverdampfer weitgehend abgezogen. Bei einer anschließenden Vakuumdestillation geht der 6-Hydroxycapronsäureallylester bei 105 bis 110°C und 1 mm Hg über. Die Ausbeute beträgt 650 g oder 63% der Theorie, bezogen auf ε-Caprolacton. Als Rückstand verbleiben Polyester der Hydroxycapronsäure.

A2) 11-Hydroxyundecansäureallylester

250 g 11-Bromundecansäure werden mit 114 g KOH, gelöst in 350 ml Methanol und 50 ml Wasser, bei 55 bis 65°C 20 Stunden lang verseift. Nach dem Abfiltrieren des ausgeschiedenen KBr wird weitgehend eingedampft und mit verdünnter, wäßriger HCl bis auf pH 2 angesäuert. Die sich abscheidende 11-Hydroxyundecansäure wird mit Methylenchlorid ausgeschüttelt und nach dem Abziehen des Lösungsmittels mit 250 ml Allylalkohol und 0,5 g p-Toluolsulfonsäure 20 Stunden am Rückfluß gekocht. Das Reaktionswasser wird laufend als Azeotrop mit Allylalkohol abdestilliert und dieser von Zeit zu Zeit durch frischen ergänzt. Nach Neutralisation mit $Na_2CO_3$ wird der überschüssige Allylalkohol abgezogen und der verbleibende Rest im Vakuum destilliert. Bei 138 bis 144°C und 1 mm Hg gingen 101 g 11-Hydroxyundecansäureallylester über, was einer Ausbeute von 50%, bezogen auf die 11-Bromundecansäure entspricht.

A4) 5-Hydroxyvaleriansäureallylester

50 g δ-Valerolacton und 290 g Allylalkohol werden unter Zusatz von 0,25 ml konzentrierter Schwefelsäure 2 Stunden unter Rückfluß gekocht. Dann wird mit 10 g $NaHCO_3$ auf pH 7 neutralisiert, der Allylalkohol abgezogen und der Rückstand im Vakuum fraktioniert. Bei 94°C und 0,8 Torr gehen 32 g 5-Hydroxyvaleriansäureallylester über, was einer Ausbeute von 40,5% der Theorie entspricht.

Die Substanzen aus A1) bis A4) wurden durch ihr Kernresonanzspektrum identifiziert.

B) Vergleichsversuche

B1) Copolymerisation von Vinylacetat mit Glykolsäureallylester in Lösung

In einem 1 l-Rundkolben mit Blattrührer und Rückflußkühler werden 217 g Vinylacetat und 33 g Glykolsäureallylester mit 250 g Äthylacetat gemischt und bei 72 bis 74°C unter Zusatz von 0,84 g tert. Butylperpivalat polymerisiert. Nach 6 Stunden sind 76,4% Umsatz, berechnet aus dem Festgehalt der Lösung, erreicht und es werden weitere 0,24 g Initiator zugegeben, die den Umsatz nach 7,5 Stunden auf 84,4% steigern. Eine weitere Zugabe von 0,12 g Initiator ergibt nach 8,5 Stunden einen Endumsatz von 95%.

Der K-Wert des Copolymeren, gemessen nach DIN 53 726 in einer Mischung aus 95% Tetrahydrofuran und 5% Wasser beträgt 39,4.

B2) Terpolymerisation von Vinylacetat, Vinyllaurat und Glykolsäureallylester in Lösung

200 g Vinylacetat, 23 g Vinyllaurat, 15 g Glykolsäureallylester und 442 g Athylacetat werden bei 72 bis 74°C unter Zugabe von 1,5 g Benzoylperoxid wie in B1) polymerisiert. Nach 7 Stunden sind 68% Umsatz erreicht. Eine weitere Initiatorgabe von 1,5 g erhöhen den Umsatz innerhalb der nächsten 17 Stunden nicht mehr.

Der K-Wert des Copolymeren, gemessen wie in B1), beträgt 21,1.

B3) Copolymerisation von Vinylacetat mit Milchsäureallylester in Lösung.

231,6 g Vinylacetat, 18,4 g Milchsäureallylester und 250 g Äthylacetat werden wie in B1) bei 72 bis 74°C polymerisiert. Die verwendeten Mengen tert. Butylperpivalat und der erzielte Umsatz ergeben sich aus folgender Tabelle:

| Zeit (Std.) | Initiator (g) | Umsatz (%) |
|---|---|---|
| 0 | 0,75 | 0 |
| 2,5 | 0,375 | 26 |
| 5,5 | 0,375 | 42 |
| 8 | 1,5 | — |
| 10 | — | 70 |
| 12 | 0,75 | 78 |
| 16 | — | 84 |

Der K-Wert des Produktes, gemessen wie in B1), beträgt 28.

B4) Copolymerisation von Vinylchlorid mit Milchsäureallylester in Suspension

In einem 1 l-Autoklaven mit Rührer werden 1,55 g Methylcellulose Methocell® HG 90 (Dow Chemical) in 500 g Wasser vorgelegt, evakuiert und ein Gemisch aus 284,6 g Vinylchlorid, 15,4 g

Milchsäureallylester und 0,75 g Cyclohexylperoxidicarbonat aufgepreßt. Dann wird 7 Stunden bei 60°C und eine Stunde bei 70°C polymerisiert, entspannt, das Suspensionspolymerisat abfiltriert und nach Waschen mit Methanol und Troknen ausgewogen. Der Umsatz beträgt nur 66,6%.

Der K-Wert des Copolymeren in Cyclohexanon beträgt 53.

B5) Copolymerisation von Vinylacetat und Hydroxypropylmethacrylat

Wie in B1) werden 230 g Vinylacetat, 20 g Hydroxypropylmethacrylat und 250 g Äthylacetat mit 1,2 g tert. Butylperpivalat polymerisiert. Nach einer längeren Induktionsperiode setzt eine heftige Polymerisation ein, die in 5 Stunden bis zum vollständigen Umsatz fürht.

Der K-Wert des Copolymeren, gemessen wie in B1), beträgt 35.

B6) Copolymerisation von Vinylacetat und Hydroxypropylacrylat

Wie in B1) werden 231,6 g Vinylacetat, 18,4 g Hydroxypropylacrylat und 250 g Äthylacetat mit 0,75 g tert. Butylperpivalat polymerisiert.

Bereits nach 2 Stunden sind 100% Umsatz erreicht. Das entstehende Copolymer hat einen K-Wert (analog B1)) von 46.

C) Beispiele zur Erfindung

C1) Copolymerisation von Vinylacetat mit 6-Hydroxycapronsäureallylester

Wie in B1) werden 204,5 g Vinylacetat, 45,5 g 6-Hydroxycapronsäureallylester und 250 g Äthylacetat unter Zusatz von 1,2 g tert. Butylperpivalat polymerisiert. Nach 7 Stunden sind 98% Umsatz erreicht.

Der K-Wert des Copolymeren beträgt 53.

C2) Terpolymerisation von Vinylacetat, Vinyllaurat und 6-Hydroxycapronsäureallylester in Lösung

Wie in B2) werden 200 g Vinylacetat, 23 g Vinyllaurat und 22 g 6-Hydroxycapronsäureallylester in 250 g Äthylacetat unter Zusatz von 1,5 g Benzoylperoxid polymerisiert. Nach 8 Stunden sind 92% Umsatz erreicht.

Der K-Wert des Copolymeren, gemessen wie in B1), beträgt 45,4.

C3) Polymerisation von Vinylacetat, Vinyllaurat, Butylacrylat und 6-Hydroxycapronsäureallylester in wäßriger Emulsion

In einem 2 l-Rundkolben mit Ankerrührer werden 107 g Wasser, 20 g Aerosol A 102 (American Cyanamid) und 15 g Methanol vorgelegt und auf 50°C erwärmt. In einem getrennten Gefäß werden in einer Lösung von 20 Aerosol A 102, 15 g Methanol, 6 g Acrylsäure und 0,7 g $NaHCO_3$ in 300 g Wasser die Monomeren Vinylacetat (360 g), Vinyllaurat (120 g), Butylacrylat (120 g) und 6-Hydroxycapronsäureallylester (41 g) emulgiert und ständig gerührt. In weiteren Gefäßen werden 6,6 g Ammoniumpersulfat in 36 ml Wasser und 3,3 g Rongalit in 36 ml Wasser gelöst. Über eine Dreifachdosierpumpe werden dann die Monomeremulsion, die Persulfat- und die Rongalitlösung gleichmäßig innerhalb 3 Stunden in die Vorlage dosiert. Nach 3,5 Stunden ist ein Festgehalt von 53,5% erreicht. Die Copolymerdispersion hat eine Viskosität von 2.100 cP (Brookfield LVT-Viscosimeter) und ergibt nach Aufstreichen und Trocknen völlig klare, weichelastische Copolymerfilme.

C4) Terpolymerisation von Vinylchlorid, Vinylacetat und 6-Hydroxycapronsäureallylester in Lösung

In einem 1 l-Autoklaven werden 300 g Äthylacetat, 36,75 g Vinylacetat und 36,75 g 6-Hydroxycapronsäureallylester sowie 1,9 g tert. Butylperpivalat vorgelegt, mit Stickstoff gespült und evakuiert. Anschließend wird auf 60°C aufgeheizt, 226,5 Vinylchlorid aufgedrückt und unter Rühren 7 Stunden polymerisiert.

Der K-Wert des Lösungspolymerisates, gemessen in Cyclohexanon, betrug 45. Der Vinylchloridgehalt wurde zu 77% bestimmt.

C5) Copolymerisation von Vinylchlorid und 6-Hydroxycapronsäureallylester in Suspension

In einem 16 l-Autoklaven werden 25 g Methylcellulose Methocell HG 90, gelöst in 8 l Wasser, 10 g Dicyclohexylperoxydicarbonat und 512 g 6-Hydroxycapronsäureallylester mit Stickstoff gespült und evakuiert. Dann werden 3.488 g Vinylchlorid aufgedrückt. Das Gemisch wird auf 60°C aufgeheizt und unter Rühren 7 Stunden lang polymerisiert. Nach dem Entspannen und Evakuieren wird abgekühlt, das Copolymer abfiltriert und mit 5 l Methanol gewaschen. Der Umsatz beträgt 87,5%. Das Copolymer hat einen K-Wert, gemessen in Cyclohexanon, von 56,8 und enthält 85% Vinylchlorid.

C6)—C9) Copolymerisation von Vinylacetat mit verschiedenen Hydroxycarbonsäureallylestern in Lösung

Die in der folgenden Tabelle angegebenen Mengen Vinylacetat und Allylester wurden wie in B1) in 250 ml Äthylacetat unter Zusatz von 1,1 g tert. Butylperpivalat polymerisiert und der K-Wert der Copolymeren in Tetrahydrofuran/Wasser gemessen.

| Beispiel Nr. | Vinylacetat (g) | Hydroxy-carbonsäure-allylester | Einsatz-menge (g) | Zeit bis 100% Umsatz (Std.) | K-Wert |
|---|---|---|---|---|---|
| C6 | 225 | 6-Hydroxycapron-säureallylester | 25 | 3,5 | 62 |
| C7 | 228 | 5-Hydroxyvalerian-säureallylester | 22 | 3 | 52 |
| C8 | 240 | 6-Hydroxycapron-säureallylester | 10 | 3 | 54 |
| C9 | 225 | 11-Hydroxyundecan-säureallylester | 25 | 5 | 52 |

D) Vernetzung der Copolymeren

D1) Vernetzung mit Isocyanaten

50 g der zu vernetzenden 50 %-igen Copolymerlösung wurden mit einer äquivalenten Menge Diisocyanat (OH: NCO=1:1) und 2 Tropfen Dibutylzinndilaurat gemischt und als Film in 0,8 mm Dicke auf eine Teflonplatte gegossen. Nach dem Verdunsten des Lösungsmittels wurde der Film von der Unterlage abgehoben und weiter im Vakuumtrockenschrank bei 60°C einige Stunden getrocknet.

D2) Vernetzung mit Hexamethoxymethylmelamin (HMMM)

50 g der zu vernetzenden Lösung oder Dispersion wurden mit 5 g HMMM ("Cymel® 300", Cyanamid International) versetzt (bei Dispersionen unter Zuhilfenahme von Wasser/Isopropanol als Lösungsmittel) und als 0,8 mm dicker Film auf Teflon ausgegossen. Nach dem Trocknen wurde 10 Minuten bei 160°C vernetzt.

D3) Analyse der Vernetzung

500 mg des vernetzten Produktes wurden in 100 ml Äthylacetat 6 Stunden gekocht. Danach wurde eventuell verdampftes Äthylacetat ergänzt, vom Unlöslichen abfiltriert oder -zentrifugiert und durch Eindampfen eines aliquoten Teiles der Lösung der lösliche Anteil des Copolymeren bestimmt. Bei Vinylchloridcopolymeren wurde anstelle von Äthylacetat 1,2-Dichloräthan verwendet. Die folgende Tabelle zeigt die Ergebnisse:

| Beispiel | Monomere[1)] | Hydroxylgruppen Mol % | Vernetzungs-mittel[2)] | % Unlös-liches |
|---|---|---|---|---|
| B5 | VAc/HPMA | 5 | TDI | 32 |
| B6 | VAc/HPA | 5 | TDI | 25 |
| C1 | VAc/HCAE | 10 | TDI | 98 |
| C3 | VAc/BA/VL/HCAE | 4 | HMMM | 96 |
| C4 | VC/VAc/HCAE | 5 | TDI | 91 |
| C5 | VC/HCAE | 5 | TDI | 97 |
| | | | HMMM | 94 |
| C7 | VAc/HVAE | 5 | IPDI | 97 |
| | | | HMDI | 97 |
| C8 | VAc/HCAE | 2 | TDI | 88 |
| C9 | VAc/HUAE | 3,8 | TDI | 89 |

[1)]VAc =Vinylacetat
VL =Vinyllaurat
VC =Vinylchlorid
BA =Butylacrylat
HPMA =Hydroxypropylmethacrylat
HPA =Hydroxypropylacrylat
HVAE =Hydroxyvaleriansäureallylester
HCAE =Hydroxycapronsäureallylester
HUAE =Hydroxyundecansäureallylester
[2)]TDI =Toluylendiisocyanat
IPDI =Isophorondiisocyanat
HMDI =Hexamethylendiisocyanat
HMMM =Hexamethoxymethylmelamin

E) Glasübergangstermperatur der Copolymeren

Als Maß für die weichmachende Wirkung der erfindungsgemäßen, Hydroxylgruppen enthaltenden Monomeren wurde die Glasübergangstemperatur der unter ihrer Verwendung

hergestellten Copolymeren gewählt. Die Glasübergangstemperatur wurde mit Hilfe der Differentialthermoanalyse bestimmt.

| Beispiel | Monomere | Gew.% Allylester | Glasübergangstemperatur (°C) |
|---|---|---|---|
| C5 | VC/HCAE | 15 | 44 |
| C6 | VAc/HCAE | 10 | 14 |
| C9 | VAc/HUAE | 10 | 8 |
| Zum Vergleich: | | | |
| | Polyvinylacetat | | 32 |
| | Polyvinylchlorid | | 81 |

(Polymer Handbook, 2nd Ed., Herausgeber: J. Brandrup und E. H. Immergut, Verlag J. Wiley & Sons, New York 1975).

A5) 6-Hydroxycapronsäureallylester—kontinuierliche Herstellung

30 ml regenerierter, mit Allylalkohol wasserfrei gewaschener, stark saurer Ionenaustauscher Amberlite® IR 120 (Rohm & Haas Co., Philadelphia, USA) wurden in ein temperiertes, senkrechtes Rohr (Länge 300 mm, Innendurchmesser 14,5 mm) eingefüllt, das am unteren Ende mit einer Glasfritte versehen war. Das Rohr wurde auf 60°C erwärmt und bei dieser Temperatur ein Gemisch aus 9 Teilen Allylalkohol und 1 Teil Caprolacton mit einer Geschwindigkeit von 100 ml/Stunde durch das Austauscherbett gepumpt. Das ablaufende Produkt wurde im Vakuum bei 30—40°C vom überschüssigen Allylalkohol befreit und analysiert. Es zeigte sich, daß alles Caprolacton umgesetzt worden war und 6-Hydroxycapronsäureallylester einer Reinheit von über 90% vorlag. Das Produkt konnte in dieser Form weiterverwendet werden, da die darin enthaltenen polymeren Allylester die Polymerisation nicht störten und sich in den Versuchsergebnissen kein Unterschied gegenüber reinem, destilliertem Material ergaben.

Die kontinuierliche Anlage lief bis zum Abbruch des Versuches mehr als 100 Stunden störungsfrei und ohne Änderung in der Produktqualität.

**Patentansprüche**

1. Vernetzbare Copolymere, die durch Polymerisation aus Vinylestern und/oder Vinylhalogeniden, hydroxylgruppenhaltigen Monomereinheiten und ggf. einem oder mehreren copolymerisierbaren Monomeren aus der Gruppe Äthylen, Propylen, Acryl-, Methacrylsäure, deren Ester mit Alkylresten bis zu 8 Kohlenstoffatomen oder deren Amide oder Acrylnitril oder Methacrylnitril hergestellt wurden, dadurch gekennzeichnet, daß das Copolymere

a) 50 bis 99 Gew.% Vinylester- und/oder Vinylhalogenideinheiten,
b) gegebenenfalls bis zu 40 Gew.% copolymerisierbare Monomereinheiten aus der Gruppe Äthylen, Propylen, Acryl-, Methacrylsäure, deren Ester mit Alkylresten bis zu 8 Kohlenstoffatomen oder deren Amide oder Acrylnitril, Methacrylnitril und
c) 1 bis 50 Gew.% hydroxylgruppenhaltige Allylestereinheiten der allgemeinen Formel

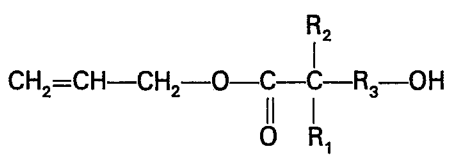

enthält, worin die Hydroxygruppe primär ist, $R_1$ und $R_2$ Wasserstoffatome oder gleiche oder verschiedene aliphatische Kohlenwasserstoffreste, vorzugsweise Wasserstoffatome oder Methylgruppen sind und $R_3$ ein Kohlenwasserstoffrest ist, wobei die Zahl der Kohlenstoffatome der Gruppen $R_1$, $R_2$ und $R_3$ zwischen 1 und 16 beträgt, die Gesamtzahl der Kohlenstoffatome in $R_1$, $R_2$ und $R_3$ mindestens 2 beträgt und die Copolymeren einen K-Wert zwischen 10 und 100 aufweisen.

2. Vernetzbare Copolymere nach Anspruch 1, dadurch gekennzeichnet, daß als Vinylester Vinylacetat und als Vinylhalogenid Vinylchlorid enthalten ist.

3. Vernetzbare Copolymere nach Anspruch 1 und 2, dadurch gekennzeichnet, daß aus der Gruppe b) Äthylen und Butylacrylat ausgewählt sind.

4. Vernetzbare Copolymere nach Anspruch 1 bis 3, dadurch gekennzeichnet, daß 2,5 bis 5 Mol% hydroxylgruppenhaltige Allylester eingesetzt werden.

5. Verfahren zur Herstellung vernetzbarer Copolymerer nach Anspruch 1 bis 4 durch Polymerisation in Masse, wäßriger Dispersion oder in Lösung unter Zusatz üblicher Polymerisationshilfsstoffe und radikalbildenden Katalysatoren ggf. unter 2 bis 80 bar Äthylen- bzw. Propylendruck im Autoklaven unter Rühren bei Temperaturen zwischen 20 und 90°C, dadurch gekennzeichnet, daß die hydroxylgruppenhaltige Allylesterkomponente gemeinsam mit den restlichen Monomeren vorgelegt wird.

6. Verwendung der Polymeren nach Anspruch 1 bis 5 in vernetzbaren Überzugsmassen, Klebemitteln, als Bindemittel für Textilprodukte, zur Herstellung von Dichtungsmassen und Formteilen.

## Revendications

1. Copolymères réticulables préparés par polymérisation d'esters vinyliques et/ou d'halogénures de vinyle et de motifs de monomères à groupes hydroxyliques, avec éventuellement un ou plusieurs monomères copolymérisables pris parmi l'éthylène, le propylène, les acides acrylique et méthacrylique, leurs esters alkyliques dont les radicaux alkyles peuvent avoir jusqu'à 8 atomes de carbone, leurs amides ou bien l'acrylonitrile ou le méthacrylonitrile, copolymères caractérisés en ce qu'ils comprennent:

a) 50 à 99% en poids de motifs d'esters vinyliques et/ou d'halogénures de vinyle,
b) éventuellement jusqu'a 40% en poids de motifs de monomères copolymérisables pris parmi l'éthylène, le propylène, les acides acrylique et méthacrylique, leurs esters alkyliques à radicaux alkyles jusqu'en $C_8$, leurs amides ou bien l'acrylonitrile ou méthacrylonitrile, et
c) 1 à 50% en poids de motifs d'esters allyliques à groupes hydroxyliques de formule générale

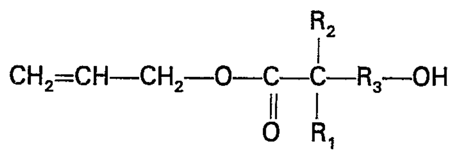

dans laquelle le groupe hydroxyle est un hydroxyle primaire, $R_1$ et $R_2$ représentent des atomes d'hydrogène ou des radicaux hydrocarbonés aliphatiques identiques ou différents, mais de préférence des atomes d'hydrogène ou des groupes méthyles, et $R_3$ est un radical hydrocarboné, le nombre des atomes de carbone de chacun des groupes $R_1$, $R_2$ et $R_3$ étant de 1 à 16, le nombre total des atomes de carbone de $R_1$, $R_2$, $R_3$ étant au moins égal à 2, et ces copolymères ayant une valeur K comprise entre 10 et 100.

2. Copolymères réticulables selon la revendication 1, caractérisés en ce qu'ils comprennent de l'acétate de vinyle comme ester vinylique et du chlorure de vinyle comme halogénure de vinyle.

3. Copolymères selon la revendication 1 ou 2, caractérisés en ce que les monomères du groupe b) sont l'éthylène et l'acrylate de butyle.

4. Copolymères selon l'une quelconque des revendications 1 à 3, caractérisés en ce qu'ils comprennent 2,5 à 5 moles % des esters allyliques à groupes hydroxyliques.

5. Procédé de préparation de copolymères réticulables suivant l'une quelconque des revendications 1 à 4 par polymérisation en masse, en solution ou en dispersion aqueuse, en présence d'auxiliaires de polymérisation usuels et de catalyseurs radicalaires, éventuellement sous une pression de 2 à 80 bars d'éthylène ou de propylène en autoclave, sous agitation, à des températures de 20 à 90°C, procédé caractérisé en ce que l'on met dès le début dans l'appareil de polymérisation les esters allyliques à groupes hydroxyliques avec les autres monomères.

6. Utilisation des polymères selon l'une quelconque des revendications 1 à 5 dans des colles ou adhésifs et produits de revêtement réticulables, comme liants pour matières textiles ainsi que pour la fabrication de produits d'étanchéification et de pièces moulées.

## Claims

1. Crosslinkable copolymers that have been manufactured, by polymerisation, from vinyl esters and/or vinyl halides, monomer units containing hydroxy groups and, optionally, one or more copolymerisable monomers selected from the group consisting of ethylene, propylene, acrylic or methacrylic acid or the esters thereof having alkyl radicals with up to 8 carbon atoms or the amides thereof, or acrylonitrile or methacrylonitrile, characterised in that the copolymer comprises

a) from 50 to 99% by weight of vinyl ester and/or vinyl halide units,
b) optionally up to 40% by weight of copolymerisable monomer units selected from the group consisting of ethylene, propylene, acrylic or methacrylic acid or the esters thereof having alkyl radicals with up to 8 carbon atoms or the amides thereof, or acrylonitrile or methacrylonitrile, and

c) from 1 to 50% by weight of hydroxy-group-containing allyl ester units of the general formula

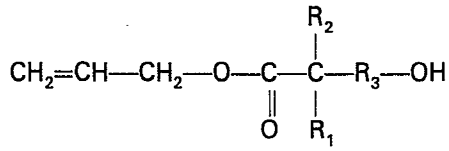

in which the hydroxy group is a primary hydroxy group, $R_1$ and $R_2$ are hydrogen atoms or the same or different aliphatic hydrocarbon radicals, preferably hydrogen atoms or methyl groups, and $R_3$ is a hydrocarbon radical, the number of carbon atoms in the groups $R_1$, $R_2$ and $R_3$ being between 1 and 16, the total number of carbon atoms in $R_1$, $R_2$ and $R_3$ being at least 2, and the copolymers having K-values of between 10 and 100.

2. Crosslinkable copolymers according to claim 1, characterised in that the vinyl ester is vinyl acetate, and the vinyl halide is vinyl chloride.

3. Crosslinkable copolymers according to claims 1 and 2, characterised in that ethylene and butyl acrylate are selected from the group b).

4. Crosslinkable copolymers according to claims 1 to 3, characterised in that from 2.5 to 5 mole% of the hydroxy-group-containing allyl ester is used.

5. Process for the manufacture of crosslinkable copolymers according to claims 1 to 4 by bulk polymerisation, by polymerisation in aqueous dispersion or by polymerisation in solution, with the addition of customary polymerisation auxiliaries and radical-forming catalysts, optionally under from 2 to 80 bar of ethylene or propylene pressure in an autoclave with stirring at temperatures between 20 and 90°C, characterised in that the hydroxy-group-containing allyl ester is placed in a vessel together with the other monomers.

6. Use of the polymers according to claims 1 to 5 in crosslinkable coating compositions, in adhesives, as binders for textile products, and for the manufacture of sealing compositions and shaped articles.